# FASCICULE DE BREVET EUROPEEN

(11) **EP 1 425 192 B1**
(45) Date de publication et mention de la délivrance du brevet: **14.05.2008**
(21) Numéro de dépôt: 02798003.6
(22) Date de dépôt: 10.09.2002
(51) Int. Cl.: B60G 15/06, F16C 27/06

(54) **DISPOSITIF DE BUTEE DE SUSPENSION**
ANSCHLAGPUFFERVORRICHTUNG
BUMP STOP DEVICE

(30) Priorité: 12.09.2001 FR 0111806
(43) Date de publication de la demande: 09.06.2004
(73) Titulaire: Aktiebolaget SKF, 415 50 Göteborg (SE)
(72) Inventeur: BEGHINI, Eric, F-37390 La Membrolle sur Choisille (FR); GORETTE, Raphaël, 37540 Saint-Cyr-sur-loire (FR); HOUDAYER, Christophe, F-37360 Semblancay (FR)
(74) Mandataire: Casalonga, Axel
(86) Numéro de dépôt international: PCT/FR2002/003077
(87) Numéro de publication internationale: WO 2003/022606

(56) Documents cités:
- DE-U- 7 208 788
- FR-A- 2 375 484
- FR-A- 2 779 096

## Description

La présente invention concerne le domaine des butées de suspension utilisées en particulier sur les véhicules automobiles dans les jambes de suspension télescopiques des roues directrices.

Une butée de suspension comprend généralement une bague supérieure et une bague inférieure entre lesquelles sont disposés des éléments roulants, sous la forme de billes ou de rouleaux.

Une butée de suspension est généralement disposée dans la partie supérieure de la jambe de suspension, entre une coupelle inférieure métallique, servant également de siège d'appui pour un ressort de suspension, et un élément supérieur solidaire de la caisse du véhicule. Le ressort du dispositif de suspension est installé autour de la tige du piston d'amortisseur dont l'extrémité est solidaire d'un bloc-support élastique. Le roulement de butée de suspension permet un mouvement de rotation entre la coupelle d'appui du ressort, mobile en rotation, et le bloc-support élastique qui est fixé à la caisse du véhicule. Le mouvement angulaire relatif entre la coupelle d'appui du ressort et le bloc élastique découle d'un braquage de la roue directrice et/ou la compression du ressort de suspension.

La butée de suspension permet également de transmettre les efforts axiaux entre le ressort et la caisse du véhicule.

On connaît, par le document FR 2 779 096, un dispositif de butée de suspension dont le roulement comprend une bague supérieure disposée à l'intérieur d'un capot en contact avec le bloc-support élastique et une bague inférieure directement en contact avec la coupelle d'appui. Le roulement comprend une cage pourvue de lèvres d'étanchéité pour assurer l'étanchéité du roulement.

Cependant, l'étanchéité du roulement ainsi obtenue n'est pas satisfaisante. En effet, les roulements de butées de suspension sont situés sous la caisse du véhicule et à proximité immédiate des roues qui projettent, notamment par temps de pluie, des éléments polluants susceptibles de rentrer dans le roulement.

La pollution du roulement par des éléments extérieurs peut à la longue altérer le bon fonctionnement du roulement.

L'invention a pour objet un roulement de butée de suspension très étanche, tout en restant compact, axialement et radialement.

L'invention propose un roulement de butée de suspension permettant de transmettre à la fois des efforts axiaux et radiaux, en assurant une bonne répartition des efforts.

L'invention propose enfin un roulement de butée de suspension à haut niveau d'étanchéité, pouvant être assemblé facilement, indémontable, et de coût de fabrication faible.

Un dispositif de butée de suspension pour véhicule, selon l'invention, est du type comprenant un roulement à contact oblique formant butée, une coupelle d'appui pour un ressort, et un bloc-support élastique, le roulement étant disposé entre la coupelle d'appui et le bloc-support élastique solidaire du châssis du véhicule. Le roulement comprend une bague supérieure disposé dans un capot supérieur annulaire formant interface entre ladite bague supérieure et le bloc élastique avec lequel le capot supérieur est en contact, une bague inférieure, et des éléments roulants disposés entre des chemins des roulements des bagues supérieure et inférieure. Le dispositif de butée de suspension comprend un capot inférieur annulaire formant interface entre la bague inférieure et la coupelle d'appui avec laquelle le capot inférieur est en contact. Les capots inférieurs et supérieurs comprennent chacun une portion épaisse et une portion mince, la portion mince d'un capot se situant axialement en regard de la portion épaisse de l'autre capot, les bagues inférieure et supérieure venant en appui sur les portions épaisses des capots inférieur et supérieur en formant un roulement à contact oblique.

La disposition d'une portion épaisse en regard d'une portion mince permet d'obtenir un roulement à contact oblique d'encombrement axial et radial réduit. La forme particulière des capots comprenant une portion épaisse et une portion mince permet une bonne répartition des efforts d'un capot vers la coupelle d'appui ou d'un capot vers le bloc-support élastique, tout en facilitant la formation sur les capots de moyens d'étanchéité et/ou la disposition de joint d'étanchéité rapportés, pour protéger le roulement de butée de suspension efficacement.

Avantageusement, une bague possède un diamètre extérieur sensiblement égal au diamètre intérieur de l'autre bague, de façon que l'on puisse obtenir les bagues inférieure et supérieure à partir d'une même ébauche pour en réduire le coût de fabrication. Une telle configuration de bague permet facilement d'obtenir un roulement à contact oblique fonctionnant dans de bonnes conditions d'utilisation.

De préférence, le rapport entre le diamètre intérieur d'une bague extérieure et le diamètre extérieur de l'autre bague est compris entre 1 et 1,05. Selon l'orientation du contact oblique du roulement, la bague supérieure est la bague de plus grand diamètre moyen, ou la bague inférieure est la bague de plus grand diamètre moyen.

Dans un mode de réalisation préféré, les capots supérieur et inférieur définissent un espace intérieur où se situent les bagues supérieure et inférieure, les capots supérieur et inférieur comprenant des moyens d'étanchéité pour assurer l'étanchéité de l'espace intérieur. Le capot inférieur coopère avec le capot supérieur pour former un espace intérieur dans lequel se situe le roulement du dispositif de butée de suspension qui se trouve ainsi protégé. Les moyens d'étanchéité des capots supérieur et inférieur coopérant mutuellement, permettent d'assurer que le roulement est protégé vis-à-vis de l'introduction d'éléments polluants extérieurs.

Dans un mode de réalisation, un capot comprend une jupe s'étendant axialement en direction de l'autre capot et limitant radialement l'espace intérieur, tout en formant un passage étroit d'étanchéité avec l'autre capot: La présence de la jupe permet de fermer radialement, à la périphérie intérieure ou extérieure, l'espace intérieur défini entre les capots supérieur et inférieur. La jupe forme un moyen d'étanchéité coopérant avec l'autre capot pour assurer l'étanchéité de l'espace intérieur, par passage étroit radial et/ou axial.

De préférence, un capot comprend des moyens de maintien axial avec l'autre capot. Ainsi, on obtient un ensemble compact et indémontable pouvant facilement être manipulé sans risquer d'être démonté accidentellement par un opérateur.

Dans un mode de réalisation, un capot comprend une lèvre élastique radialement s'étendant en direction d'une jupe de l'autre capot en formant un passage étroit et coopérant avec un bourrelet radial de la jupe pour autoriser un mouvement axial dans un sens tout en interdisant un mouvement axial inverse. La lèvre coopère avec la jupe pour réaliser un moyen d'étanchéité de l'espace intérieur. La jupe coopère avec le bourrelet radial pour réaliser un moyen de maintien axial entre le capot supérieur et le capot inférieur. La jupe remplit donc une double fonction de maintien axial et d'étanchéité, pouvant être réalisé à faible coût, et permettant un montage facile du roulement de butée de suspension, et assurant que le roulement de butée de suspension ne peut être démonté accidentellement.

Pour améliorer encore l'étanchéité du roulement, le dispositif de butée de suspension peut comprendre un joint d'étanchéité disposé sur un capot, par exemple dans une nervure annulaire, et possédant une lèvre en contact avec une portion radiale de la bague disposée sur l'autre capot, ou avec l'autre capot. Eventuellement, chaque capot peut comprendre un joint d'étanchéité coopérant avec la bague disposée sur l'autre capot ou directement avec l'autre capot. Ainsi, un joint d'étanchéité réalise une étanchéité améliorée, les moyens d'étanchéité entre les capots supérieur et inférieur permettant une étanchéité supplémentaire.

Avantageusement, un joint d'étanchéité est surmoulé sur un capot par injection ou moulé en même temps que ledit capot par bi-injection.

L'invention concerne également un procédé de fabrication d'un roulement comprenant une bague inférieure et une bague supérieure, dans lequel on forme dans une coupelle annulaire mince deux bagues pourvues de portions toroïdales comprenant des surfaces présentant en section droite un profil concave, lesdites surfaces étant aptes à former des chemins de roulement, une bague possédant un diamètre intérieur sensiblement égal au diamètre extérieur de l'autre bagué, les bagues étant reliées, on sépare les bagues, on réduit le rayon de gorge d'au moins une bague et/ou le diamètre intérieur de la bague de plus grand diamètre.

Ce procédé de fabrication peut facilement être appliqué à un dispositif de butée de suspension : on solidarise les bagues avec des capots annulaires inférieur et supérieur, on dispose des éléments roulants entre les bagues pour former un roulement de butée de suspension, on dispose le roulement entre une coupelle d'appui d'un ressort et un bloc-support élastique solidaire du châssis du véhicule, le capot supérieur formant interface entre ladite bague supérieure et le bloc élastique avec lequel on le met en contact, le capot inférieur formant interface entre la bague inférieure et la coupelle d'appui avec laquelle on le met en contact, chaque capot comprenant une portion épaisse et une portion mince, la portion mince d'un capot se situant axialement en regard de la portion épaisse de l'autre capot, les bagues inférieure et supérieure venant en appui sur les portions épaisses des capots inférieur et supérieur en formant un roulement à contact oblique. Les bagues permettent facilement la fabrication d'un roulement à contact oblique acceptant des efforts axiaux et radiaux.

La présente invention et ses avantages seront mieux compris à l'étude de la description détaillée de modes de réalisation pris à titre d'exemples non-limitatifs et illustrés par les dessins annexés, sur lesquels :
- la figure 1 est une vue en coupe axiale d'un roulement de butée de suspension à l'état monté ;
- la figure 2 est une vue du roulement de butée de suspension selon la figure 1;
- la figure 3 est une variante d'un roulement de butée de suspension selon la figure 2 ; et
- les figures 4 à 6 illustrent un procédé de fabrication de deux bagues utilisées dans les roulements de butées de suspension selon les figures 1 à 3.

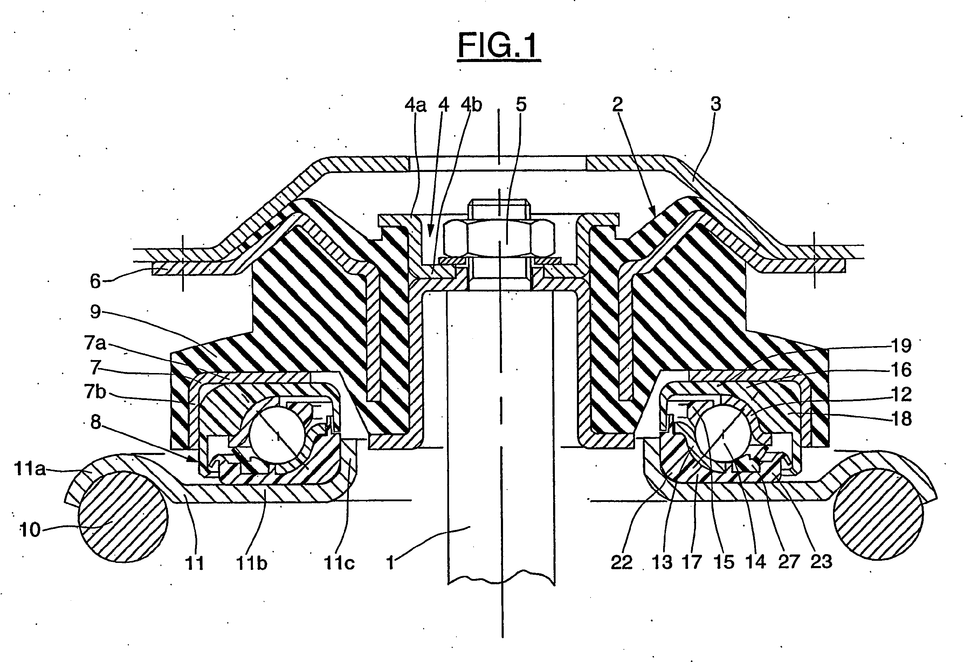

Sur la figure 1, un amortisseur comprend un cylindre non représenté dans lequel peut coulisser un piston dont la tige 1 est liée par son extrémité supérieure à un bloc-support élastique 2 qui vient en appui dans un élément du châssis 3 formant siège en étant solidarisé avec celui-ci. Le bloc-support élastique 2 comprend un élément de liaison intérieure 4 annulaire réalisé en deux parties 4à et 4b sur lesquelles vient se monter l'extrémité de la tige 1 du piston d'amortisseur au moyen d'un écrou 5, un élément de liaison extérieure 6 annulaire servant à la solidarisation avec le châssis 3, une coupelle supérieure 7 annulaire servant de siège d'appui pour le roulement de butée 8, un bloc de caoutchouc 9 adhérisé à la surface de ces trois pièces et réalisant une liaison entre celles-ci avec filtration des vibrations.

L'élément de liaison extérieure 6 est fixé au châssis 3, par exemple par vissage ou boulonnage. La coupelle supérieure 7 est disposée axialement au niveau de l'élément de liaison intérieure 4, mais est de diamètre supérieur. On voit également le ressort de suspension 10 dont l'extrémité supérieure s'appuie sur une coupelle inférieure 11 annulaire qui, à son tour, s' appuie sur le roulement de butée 8.

La coupelle supérieure 7 comprend une portion radiale 7a et une portion axiale cylindrique 7b s'étendant à partir de la portion de plus grand diamètre de la portion radiale 7a. La surface supérieure de la portion radiale 7a et la surface extérieure de la portion cylindrique 7b sont en contact avec le bloc de caoutchouc 9 du bloc-support élastique 2.

La coupelle inférieure 11 comprend une gorge 11a dans laquelle s'appui l'extrémité du ressort 10, une portion radiale 11b s'étendant radialement vers l'intérieur à partir de la gorge 11a, et une portion cylindrique 11c s'étendant axialement vers la coupelle supérieure 7 à partir du bord intérieur libre de la portion radiale 11b.

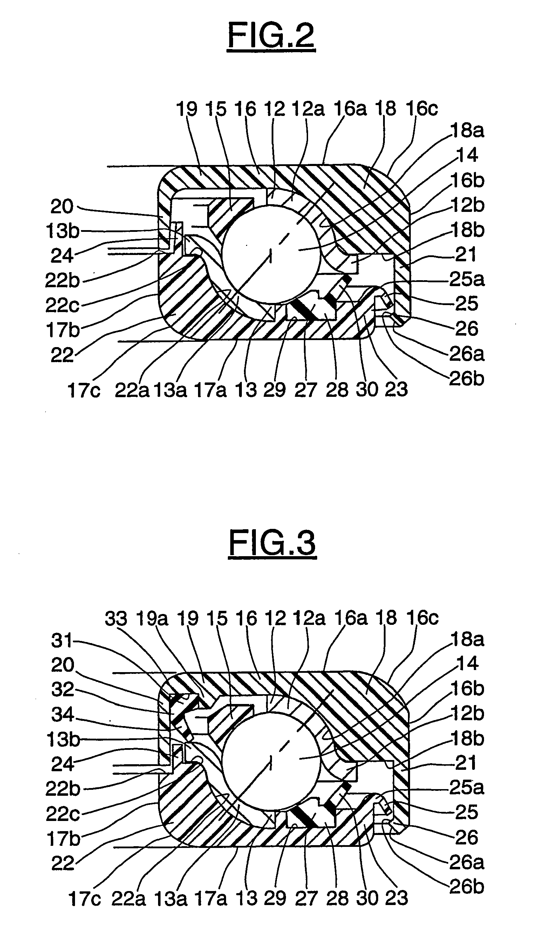

La butée de suspension 8, mieux visible sur la figure 2, comprend une bague supérieure 12, une bague inférieure 13, entre lesquelles sont logés des éléments roulants 14, ici des billes, maintenus circonférentiellement régulièrement espacées par une cage 15 en matériau synthétique. Les bagues supérieure 12 et inférieure 13 sont formées en tôle d'acier par découpe et emboutissage.

La bague supérieure 12 comprend une portion toroïdale 12a présentant en section droite un profil interne concave en quart de cercle et apte à former un chemin de roulement torique pour des billes, ladite portion toroïdale 12a étant prolongée vers l'extérieur par une portion radiale 12b, s'étendant à partir d'un bord inférieur de la portion toroïdale 12a.

La bague inférieure 13 comprend une portion toroïdale 13a présentant en section droite un profil interne concave en quart de cercle et apte à former un chemin de roulement torique pour des billes, ladite portion toroïdale 13a étant prolongée vers l'intérieur par une portion radiale 13b, s'étendant à partir d'un bord supérieur de la portion toroïdale 13a. Le diamètre intérieur de la bague supérieure 12 est sensiblement égal au diamètre extérieur de la bague inférieure 13.

La butée de suspension 8 comprend un capot supérieur annulaire 16 et un capot inférieur annulaire 17 en matériau synthétique tel qu'un polyamide chargé de fibres de verre. Le capot supérieur 16 comprend une portion périphérique épaisse 18 prolongée radialement vers l'intérieur par une portion radiale mince 19 de plus faible épaisseur, à partir de l'extrémité supérieure de la portion épaisse 18.

La portion épaisse 18 comprend une surface radiale 18b orientée vers le capot inférieur 17 et une surface intérieure toroïdale 18a présentant en section droite un profil concave orienté vers le capot inférieur 17 et radialement vers l'intérieur, la surface intérieure 18a reliant la portion épaisse 18 à la portion mince 19. La portion épaisse 18 est d'épaisseur diminuant radialement vers l'intérieur. Le capot supérieur 16 comprend une surface radiale supérieure 16a et une surface cylindrique extérieure 16b reliées par un chanfrein arrondi 16c.

Le capot supérieur 16 comprend une jupe intérieure 20 s'étendant axialement en direction du capot inférieur 17 à partir de la zone de moindre diamètre de la portion mince 19. Le capot 16 comprend également une jupe extérieure 21 s'étendant axialement en direction du capot inférieur 17 à partir de la zone de plus grand diamètre de la portion épaisse 18.

La portion épaisse 18 est en concordance de forme avec la bague supérieure 12, la surface extérieure convexe de la portion toroïdale 12a venant en appui sur la surface intérieure toroïdale 18a de la portion épaisse 18, et la portion sensiblement radiale 12b débordant sur la surface radiale 18b de la portion épaisse 18.

Le capot inférieur 17 comprend une portion épaisse 22 de moindre diamètre prolongée radialement vers l'extérieur, et à partir d'un bord inférieur de la portion épaisse 22, par une portion mince radiale 23 de plus faible épaisseur. La portion épaisse 22 comprend une surface extérieure 22a présentant en section droite un profil concave orienté vers l'extérieur, la surface extérieure 22a reliant la portion épaisse 22 à la portion de moindre épaisseur 23. La portion épaisse 22 est d'épaisseur diminuant radialement vers l'extérieur. Le capot inférieur 17 comprend une surface radiale inférieure 17a et une surface intérieure cylindrique 17b reliées par un chanfrein arrondi 17c.

La portion épaisse 22 est en concordance de forme avec la bague inférieure 13, la surface intérieure à profil concave de la portion toroïdale 13a venant en appui sur la surface extérieure 22a de la portion épaisse, la portion radiale 13b recouvrant légèrement la portion épaisse 22 du capot inférieur 17.

Le capot inférieur 17 comprend une nervure annulaire 24 s'étendant axialement en direction du capot supérieur 16, à partir de la portion épaisse 22. Le diamètre de la nervure annulaire 24 est supérieur au diamètre de la surface cylindrique intérieure 17b, en étant inférieur au diamètre de la zone de plus petit diamètre de la surface extérieure 22a. Le capot inférieur 17 comprend une surface radiale 22b située entre la surface cylindrique 17b et la nervure annulaire 24, et une surface radiale 22c située entre la nervure annulaire 24 et le bord supérieur de la surface extérieure 22a. La portion radiale 13b de la bague inférieure 13 recouvre la surface radiale 22c en venant radialement à proximité de la nervure annulaire 24.

La jupe intérieure 20 du capot supérieur 16 s'étend axialement à proximité de la surface radiale 22b en formant un passage radial étroit. La jupe extérieure 20 entoure la nervure annulaire 24 en formant un passage axial étroit. Ainsi, la jupe 20 coopère avec la nervure annulaire 24 pour former un moyen d'étanchéité par passage étroit entre le capot inférieur 17 et le capot supérieur 16.

La jupe intérieure 20 possède un diamètre intérieur sensiblement égal au diamètre intérieur de la portion épaisse 22 du capot inférieur 17.

Le capot 17 comprend une lèvre 25 élastique radialement, s'étendant obliquement vers l'extérieur à partir de la surface d'un bourrelet annulaire 25a formé à l'extrémité de plus grand diamètre de la portion de moindre épaisseur 23, et venant en contact ou à proximité de la surface intérieure de la jupe extérieure 21 du capot supérieur 16. La lèvre 25 s'étend radialement vers l'extérieur et axialement du côté opposé au capot supérieur 16. La lèvre 25 permet de réaliser un moyen d'étanchéité entre les capots supérieur 16 et inférieur 17 par passage étroit ou éventuellement par contact de frottement.

La jupe extérieure 21 comprend à son extrémité axiale opposée au capot supérieur 16 un bourrelet annulaire 26 s'étendant radialement vers l'intérieur. Le bourrelet annulaire 26 permet le passage axialement dans un sens de la lèvre 25 du capot inférieur 17 qui se déforme radialement vers l'intérieur, et interdit un mouvement axial inverse de la lèvre 25. On peut ainsi solidariser axialement le capot inférieur 17 avec le capot supérieur 16. Le bourrelet 26 comprend une surface tronconique 26a orientée du côté opposé au capot supérieur 16 facilitant la déformation de la lèvre 25 lors de l'introduction du capot inférieur 17 dans le capot supérieur 16. Le bourrelet 26 comprend une surface tronconique 26b orientée vers le capot 16, sur laquelle la lèvre 25 vient en appui si le capot inférieur 17 tend à s'éloigner axialement du capot supérieur 16, interdisant un mouvement axial d'éloignement des capots inférieur 17 et supérieur 16.

La lèvre 25 possède une double fonction d'étanchéité et de maintien axial. La lèvre 25, monobloc avec le capot inférieur 17 peut être obtenue facilement en même temps que le capot inférieur 17. La lèvre 25 permet un montage facile et un maintien axial avec éventuellement un jeu axial.

La butée de suspension 8 comprend un joint d'étanchéité 27 comprenant un talon 28 disposé et fixé dans une rainure annulaire 29 du capot inférieur 17 et une lèvre 30 s'étendant radialement vers l'extérieur et axialement vers le capot supérieur 16, et venant en contact de frottement avec la portion radiale 12b de la bague supérieure 12. Le talon 28 du joint d'étanchéité 27 est situé axialement en regard des éléments roulants 14, en entourant le bord libre de la portion toroïdale 13a de la bague inférieure 13.

L'utilisation d'un capot supérieur 16 et d'un capot inférieur 17 permet de former un espace intérieur délimité axialement par le capot supérieur 16 et le capot inférieur 17 et radialement par les jupes intérieure 20 et extérieure 21, dans lequel sont disposées les bagues 12, 13 ainsi que les éléments roulants 14. On peut facilement assurer l'étanchéité de l'espace intérieur.

Les capots 16, 17 formant une interface respectivement entre la coupelle supérieure 7 et la bague supérieure 12, et entre la bague inférieure 13 et la coupelle inférieure 11, permettent une transmission et une répartition des efforts axiaux et radiaux entre les coupelles supérieure 7 et inférieure 11. En revenant à la figure 1, le capot supérieur 16 est en appui axial par ses portions épaisse 18 et mince 19 sur la portion annulaire 7a de la coupelle supérieure 7, et en contact par sa portion épaisse 18 avec la portion cylindrique 7b. La portion épaisse 18 transmet des efforts radiaux et axiaux à la coupelle supérieure 7. La portion mince 19 transmet principalement des efforts axiaux à la coupelle supérieure 7. De même, le capot inférieur 17 est en appui axial par ses portions épaisses 22 et mince 23 sur la portion annulaire 11b de la coupelle inférieure, et en appui radial, par sa portion épaisse 22, sur la portion axiale 11c.

Eventuellement, on peut disposer le capot supérieur 16 directement en contact avec le bloc de caoutchouc 9 sans utiliser de coupelle supérieure 7 intermédiaire.

La lèvre 25 coopérant avec le bourrelet annulaire 26 forme un moyen de retenue axiale entre le capot supérieur 16 et le capot inférieur 17 de façon à obtenir un roulement de butée de suspension 8 facile à assembler et indémontable, de sorte qu'il peut être manipulé par un opérateur sans risque de démontage accidentel.

Pour améliorer l'étanchéité du roulement de butée de suspension 8, et comme cela est représenté sur la figure 3, on peut prévoir de disposer un second joint d'étanchéité 31 possédant un talon 32 disposé radialement dans la zone de plus petit diamètre de la portion mince 19, fixé dans une rainure annulaire 33 formée entre la jupe intérieure 20 et un bourrelet annulaire 19a de la portion de moindre épaisseur 19 du capot supérieur 16, et possédant une lèvre 34 s'étendant obliquement, axialement en direction du capot inférieur 17 et radialement vers l'extérieur, et venant en contact de frottement avec la portion radiale 13b de la bague inférieure 13. Ainsi, les joints d'étanchéité 31, 27 permettent une étanchéité efficace, améliorant l'étanchéité déjà apportée par les moyens d'étanchéité des capots supérieur 16 et inférieur 17.

La présence des portions minces 19, 23 s'étendant radialement, et axialement en regard des portions épaisses 22, 18, facilite la fixation des joints d'étanchéité supplémentaires 31, 27.

Dans le mode de réalisation illustré par la figure 3, la surface radiale 22b est formée à un niveau décalé axialement vers le bas par rapport à la surface radiale 22c, de sorte que la jupe extérieure 21 est plus étendue axialement, la nervure annulaire 24 étant moins étendue axialement pour permettre le passage de la lèvre 34, tout en conservant un passage étroit de dimensions similaires au mode de réalisation illustré auparavant.

Dans les modes de réalisation précédents, on peut facilement obtenir les capots supérieur 16 et inférieur 17 par moulage. Avantageusement, les joints 27, 31 peuvent être surmoulés directement sur les capots supérieurs et inférieurs 16, 17 ou être fabriqués par moulage par bi-injection en même temps que lesdits capots 16, 17.

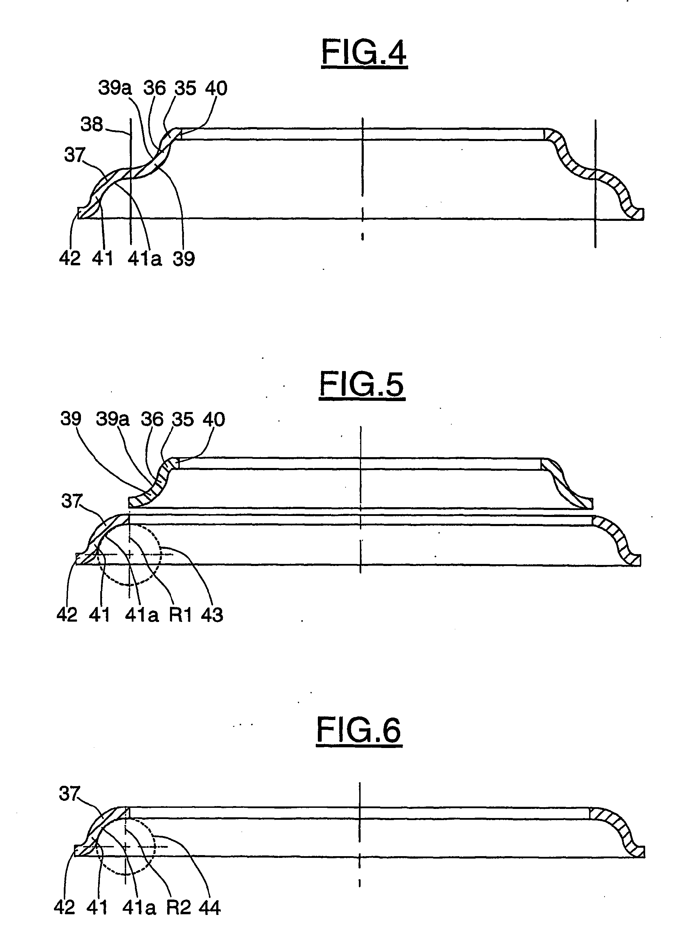

Le diamètre extérieur de la bague inférieure 13 est sensiblement égal au diamètre intérieur de la bague supérieure 12. Cette configuration particulière permet d'obtenir les bagues supérieure 12 et inférieure 13 à partir d'une même ébauche, comme illustré sur les figures 4 à 6.

Sur la figure 4, une coupelle annulaire 35 en tôle mince, mise en forme par exemple par découpe et emboutissage, comprend deux futures bagues 36, 37 reliées entre elles et séparées symboliquement sur la figure 4 par des traits 38. La bague 36 de plus faible diamètre comprend une portion toroïdale 39, dont la surface extérieure 39a présente en section droite un profil concave sensiblement en quart de cercle, et une portion radiale 40 s'étendant vers l'intérieur à partir de la zone de moindre diamètre de la portion toroïdale 39.

La bague 37 s'étend à partir du bord libre de la bague 36 opposée à la portion radiale 40. La bague 37 comprend une portion toroïdale 41 dont la surface intérieure 41a présente en section droite un profil concave sensiblement en quart de cercle, et comprend une portion radiale 42 s'étendant vers l'extérieur à partir du bord libre de la bague 37 opposé à la bague 36.

Les surfaces à profil concave 39a, 41a des portions toroïdales 39, 41 des bagues 36, 37 sont aptes à former des chemins de roulement pour des éléments roulants d'un roulement de butée de suspension, par exemple des billes.

Pour obtenir les bagues inférieure et supérieure, on sépare les bagues 36, 37, par exemple au moyen d'un poinçon de découpe venant cisailler la matière de la coupelle 35 suivant un cercle dont le centre passe par l'axe de révolution de la coupelle 35 et délimité radialement par les traits 38. On obtient une bague 36 de diamètre extérieur sensiblement égal au diamètre intérieur de l'autre bague 37. La surface à profil concave 39a possède un rayon de gorge R1 matérialisé sur un cercle en pointillés 43.

La figure 6 illustre la bague 37 après une opération de mise en forme supplémentaire, au cours de laquelle on réduit le rayon de gorge de la bague 37 pour obtenir un rayon de gorge R2 inférieur à R1, matérialisé sur un cercle en pointillés 44. On peut, lors de la même opération, diminuer légèrement le diamètre intérieur de la bague 37 de façon que la bague 37 déborde radialement vers l'intérieur au-delà du rayon primitif du palier à roulement formé en utilisant la bague 37, pour assurer que le bord libre de la bague 37 n'endommage pas les éléments roulant en cas d'effort axial important. On peut réaliser une opération identique sur la bague 36.

On adopte de préférence sur les bagues finies un rayon de gorge R2 de la bague 37 identique au rayon de gorge de la bague 36, les deux rayons de gorge étant légèrement supérieurs au rayon des billes du roulement. De préférence, le rapport entre le diamètre intérieur final de la bague 36 et le diamètre extérieur final de la bague 37 est compris entre 1 et 1.05.

En revenant aux figures 1 à 3, et en utilisant les bagues 36 et 37 dont les diamètres intérieurs et extérieurs ont été modifiés, pour former les bagues 13 et 12, on assure que l'extrémité libre de la portion toroïdale 12a de la bague supérieure 12 et l'extrémité libre de la portion toroïdale 13a de la bague inférieure 13 n'endommageront pas les éléments roulants 14 en cas de transmission d'un effort axial important par le roulement de butée de suspension 8.

Le procédé de fabrication du roulement de suspension 8 permet d'obtenir les bagues supérieure et inférieure à partir d'une même ébauche, ce qui permet de réduire le coût de fabrication du roulement de butée de suspension. De plus, par une opération supplémentaire simple, on réduit le rayon de gorge de la bague inférieure et/ou de la bague supérieure, et on assure la bonne tenue des éléments lors de la transmission d'efforts axiaux importants.

Grâce à l'invention, on obtient un roulement de butée de suspension comprenant deux capots définissant un espace intérieur dont l'étanchéité est assurée par des moyens d'étanchéité des capots coopérant mutuellement ainsi que par des joints d'étanchéité rapportés. La structure particulière des capots permet d'obtenir un roulement d'encombrement axial réduit, facilitant la disposition de joints d'étanchéités rapportés. Le roulement de butée de suspension permet de transmettre des efforts à la fois axiaux et radiaux, les capots inférieur et supérieur permettant une bonne répartition et une meilleure transmission des efforts de la coupelle d'appui inférieure vers la coupelle d'appui supérieure, et réciproquement.

## Revendications

1. Dispositif de butée de suspension pour véhicule, du type comprenant un roulement à contact oblique formant butée (8), une coupelle d'appui (11) pour un ressort, et un bloc-support élastique (2), le roulement étant disposé entre la coupelle d'appui (11) et le bloc-support élastique (2) solidaire du châssis du véhicule, le roulement comprenant une bague supérieure (12) disposé dans un capot supérieur (16) annulaire formant interface entre ladite bague supérieure (12) et le bloc élastique (2) avec lequel le capot supérieur (16) est en contact, une bague inférieure (13), et des éléments roulants (14) disposés entre des chemins des roulements des bagues supérieure et inférieure, **caractérisé par le fait qu'**il comprend un capot inférieur (17) annulaire formant interface entre la bague inférieure (13) et la coupelle d'appui (11) avec laquelle le capot inférieur (17) est en contact, chaque capot (16, 17) comprenant une portion épaisse (18, 22) et une portion mince (19, 23), la portion mince (19, 23) d'un capot se situant axialement en regard de la portion épaisse (22, 18) de l'autre capot, les bagues inférieure (13) et supérieure (12) venant en appui sur les portions épaisses (22, 18) des capots inférieur (17) et supérieur (16) en formant un roulement à contact oblique.

2. Dispositif selon la revendication 1, **caractérisé par le fait qu'**une bague possède un diamètre extérieur sensiblement égal au diamètre intérieur de l'autre bague, de façon que l'on puisse obtenir les bagues inférieure (13) et supérieure (12) à partir d'une même ébauche pour en réduire le coût de fabrication.

3. Dispositif selon l'une quelconque des revendications 1 ou 2, **caractérisé par le fait que** le rapport entre le diamètre intérieur d'une bague extérieure et le diamètre extérieur de l'autre bague est compris entre 1 et 1,05.

4. Dispositif selon l'une quelconque des revendications précédentes, **caractérisé par le fait que** les capots supérieur (16) et inférieur (17) définissent un espace intérieur où se situent les bagues supérieure (12) et inférieure (13), les capots supérieur et inférieur comprenant des moyens d'étanchéité pour assurer l'étanchéité de l'espace intérieur.

5. Dispositif selon l'une quelconque des revendications précédentes, **caractérisé par le fait qu'**un capot (16) comprend une jupe (21) s'étendant axialement en direction de l'autre capot (17) et limitant radialement l'espace intérieur, tout en formant un passage étroit d'étanchéité avec l'autre capot (17).

6. Dispositif selon l'une quelconque des revendications précédentes, **caractérisé par le fait qu'**un capot (16) comprend des moyens de maintien axial avec l'autre capot (17).

7. Dispositif selon l'une quelconque des revendications précédentes, **caractérisé par le fait qu'**un capot (17) comprend une lèvre (25) élastique radialement s'étendant en direction d'une jupe (20) de l'autre capot en formant un passage étroit et coopérant avec un bourrelet radial (26) de la jupe (20) pour autoriser un mouvement axial dans un sens tout en interdisant un mouvement axial inverse.

8. Dispositif selon l'une quelconque des revendications précédentes, **caractérisé par le fait qu'**il comprend un joint d'étanchéité (27) disposé sur un capot (17) et possédant une lèvre (30) en contact avec une portion radiale (12b) de la bague disposée sur l'autre capot (16), ou avec l'autre capot.

9. Dispositif selon l'une quelconque des revendications précédentes, **caractérisé par le fait qu'**un joint d'étanchéité (27) est surmoulé sur un capot (17) par injection ou moulé en même temps que le capot par bi-injection.

10. Procédé de fabrication d'un roulement comprenant une bague inférieure et une bague supérieure, **caractérisé par le fait qu'**on forme dans une coupelle annulaire (35) mince deux bagues annulaires (36, 37) pourvues de portions toroïdales (39, 41) comprenant des surfaces (39a, 41a) présentant en section droite un profil concave, lesdites surfaces (39a, 41a) étant aptes à former des chemins de roulement, une bague (37) possédant un diamètre intérieur sensiblement égal au diamètre extérieur de l'autre bague (36), les bagues étant reliées, on sépare les bagues, on réduit le rayon de gorge d'au moins une bague et/ou le diamètre intérieur de la bague de plus grand diamètre.

11. Procédé de fabrication selon la revendication 10, **caractérisé par le fait qu'**on solidarise les bagues (12, 13) avec des capots annulaires inférieur 17 et supérieur 16, on dispose des éléments roulants (14) entre les bagues pour former un roulement de butée de suspension (8), on dispose le roulement entre une coupelle d'appui (11) d'un ressort et un bloc-support élastique (2) solidaire du châssis du véhicule, le capot supérieur (16) formant interface entre ladite bague supérieure (12) et le bloc élastique (2) avec lequel on le met en contact, le capot inférieur (17) formant interface entre la bague inférieure (13) et la coupelle d'appui (11) avec laquelle on le met en contact, chaque capot (16, 17) comprenant une portion épaisse (18, 22) et une portion mince (19, 23), la portion mince (19, 23) d'un capot se situant axialement en regard de la portion épaisse (22, 18) de l'autre capot, les bagues inférieure (13) et supérieure (12) venant en appui sur les portions épaisses (22, 18) des capots inférieur (17) et supérieur (16) en formant un roulement à contact oblique..

12. Roulement à contact oblique (8) pour dispositif de butée de suspension pour véhicule, le roulement comprenant une bague supérieure (12) disposée dans un capot supérieur (16) annulaire, le capot étant prévu pour venir en contact avec un élément d'appui en formant interface entre ladite bague supérieure (12) et l'élément d'appui, une bague inférieure (13), et des éléments roulants (14) disposés entre des chemins des roulements des bagues supérieure et inférieure, **caractérisé par le fait qu'**il comprend un capot inférieur (17) annulaire prévu pour venir en contact avec un autre élément d'appui en formant interface entre la bague inférieure (13) et l'autre élément d'appui (11), chaque capot (16, 17) comprenant une portion épaisse (18, 22) et une portion mince (19, 23), la portion mince (19, 23) d'un capot se situant axialement en regard de la portion épaisse (22, 18) de l'autre capot, les bagues inférieure (13) et supérieure (12) venant en appui sur les portions épaisses (22, 18) des capots inférieur (17) et supérieur (16) en formant un roulement à contact oblique.

13. Roulement selon la revendication 12, **caractérisé par le fait qu'**une bague possède un diamètre extérieur sensiblement égal au diamètre intérieur de l'autre bague, de façon que l'on puisse obtenir les bagues inférieure (13) et supérieure (12) à partir d'une même ébauche pour en réduire le coût de fabrication.

14. Roulement selon l'une quelconque des revendications 12 ou 13, **caractérisé par le fait que** le rapport entre le diamètre intérieur d'une bague extérieure et le diamètre extérieur de l'autre bague est compris entre 1 et 1,05.

15. Roulement selon l'une quelconque des revendications 12 à 14, **caractérisé par le fait que** les capots supérieur (16) et inférieur (17) définissent un espace intérieur où se situent les bagues supérieure (12) et inférieure (13), les capots supérieur et inférieur comprenant des moyens d'étanchéité pour assurer l'étanchéité de l'espace intérieur.

16. Roulement selon l'une quelconque des revendications 12 à 15, **caractérisé par le fait qu'**un capot (16) comprend une jupe (21) s'étendant axialement en direction de l'autre capot (17) et limitant radialement l'espace intérieur, tout en formant un passage étroit d'étanchéité avec l'autre capot (17).

17. Roulement selon l'une quelconque des revendications 12 à 16, **caractérisé par le fait qu'**un capot (16) comprend des moyens de maintien axial avec l'autre capot (17).

18. Roulement selon l'une quelconque des revendications 12 à 17, **caractérisé par le fait qu'**un capot (17) comprend une lèvre (25) élastique radialement s'étendant en direction d'une jupe (20) de l'autre capot en formant un passage étroit et coopérant avec un bourrelet radial (26) de la jupe (20) pour autoriser un mouvement axial dans un sens tout en interdisant un mouvement axial inverse.

19. Roulement selon l'une quelconque des revendications 12 à 18, **caractérisé par le fait qu'**il comprend un joint d'étanchéité (27) disposé sur un capot (17) et possédant une lèvre (30) en contact avec une portion radiale (12b) de la bague disposée sur l'autre capot (16), ou avec l'autre capot.

20. Roulement selon l'une quelconque des revendications 12 à 19, **caractérisé par le fait qu'**un joint d'étanchéité (27) est surmoulé sur un capot (17) par injection ou moulé en même temps que le capot par bi-injection.

## Claims

1. Vehicle suspension thrust bearing device of the type comprising a thrust forming angular-contact rolling bearing (8), a cup (11) for a spring, and an elastic support block (2), the rolling bearing being placed between the cup (11) and the elastic support block (2) secured to the vehicle chassis, the rolling bearing comprising an upper race (12) placed inside an upper annular cap (16) forming an interface between said upper race (12) and the elastic block (2) with which the upper cap (16) is in contact, a lower race (13), and rolling elements (14) placed between raceways of the upper and lower races, **characterized in that** it comprises an annular lower cap (17) forming an interface between the lower race (13) and the cup (11) with which the lower cap (17) is in contact, each cap (16, 17) comprising a thick portion (18, 22) and a thin portion (19, 23), the thin portion (19, 23) of one cap being situated axially opposite the thick portion (22, 18) of the other cap, the lower (13) and upper (12) races bearing on the thick portions (22, 18) of the lower (17) and upper (16) caps thereby forming an angular-contact rolling bearing.

2. Device according to Claim 1, **characterized in that** one race has an external diameter substantially equal to the internal diameter of the other race, so that the lower race (13) and upper race (12) can be obtained from one and the same blank to reduce their fabrication cost.

3. Device according to either one of Claims 1 or 2, **characterized in that** the ratio between the internal diameter of one outer race and the external diameter of the other race lies between 1 and 1.05.

4. Device according to any one of the preceding claims, **characterized in that** the upper cap (16) and lower cap (17) define an internal space in which the upper race (12) and lower race (13) are located, the upper and lower caps comprising sealing means to seal the internal space.

5. Device according to any one of the preceding claims, **characterized in that** one cap (16) comprises a skirt (21) extending axially toward the other cap (17) and radially limiting the internal space, while forming a narrow sealing passage with the other cap (17).

6. Device according to any one of the preceding claims, **characterized in that** one cap (16) comprises axial means of retention with the other cap (17).

7. Device according to any one of the preceding claims, **characterized in that** one cap (17) comprises a radially elastic lip (25) extending toward a skirt (20) of the other cap thereby forming a narrow passage and cooperating with a radial flange (26) of the skirt (20) to allow an axial motion in one direction while preventing an inverse axial motion.

8. Device according to any one of the preceding claims, **characterized in that** it comprises a seal (27) placed on the cap (17) and having one lip (30) in contact with one radial portion (12b) of the race placed on the other cap (16), or with the other cap.

9. Device according to any one of the preceding claims, **characterized in that** a seal (27) is injection overmolded onto one cap (17) or dual injection molded at the same time as the cap.

10. Method of fabricating a rolling bearing comprising a lower race and an upper race, **characterized in that**, in a thin annular cup (35), two annular races (36, 37) with toroidal portions (39, 41) are formed, these portions comprising surfaces (39a, 41a) with, in cross section, a concave profile, said surfaces (39a, 41a) being suitable for forming raceways, one race (37) having an internal diameter substantially equal to the external diameter of the other race (36), the races being connected, the races are separated, and the recess radius of at least one race and/or the internal diameter of the larger diameter race is reduced.

11. Fabrication method according to Claim 10, **characterized in that** the races (12, 13) are secured with lower (17) and upper (16) annular cups, rolling elements (14) are placed between the races to form a suspension bump stop thrust bearing (8), the bearing is placed between a cup (11) of a spring and an elastic support block (2) secured to the vehicle chassis, the upper cap (16) forming an interface between said upper race (12) and the elastic block (2) with which it is placed in contact, the lower cap (17) forming an interface between the lower race (13) and the cup (11) with which it is placed in contact, each cap (16, 17) comprising a thick portion (18, 22) and a thin portion (19, 23), the thin portion (19, 23) of one cap being situated axially opposite the thick portion (22, 18) of the other cap, the lower (13) and upper (12) races bearing against the thick portions (22, 18) of the lower (17) and upper (16) caps thereby forming an angular-contact rolling bearing.

12. Angular-contact rolling bearing (8) for a vehicle suspension thrust bearing device, the rolling bearing comprising an upper race (12) arranged in an annular upper cap (16), the cap being designed to come into contact with a bearing element thereby forming an interface between said upper race (12) and the bearing element, a lower race (13) and rolling elements (14) placed between raceways of the upper and lower races, **characterized in that** it comprises an annular lower cap (17) designed to come into contact with another bearing element thereby forming an interface between the lower race (13) and the other bearing element (11), each cap (16, 17) comprising a thick portion (18, 22) and a thin portion (19, 23), the thin portion (19, 23) of one cap being situated axially opposite the thick portion (22, 18) of the other cap, the lower (13) and upper (12) races coming to bear against the thick portions (22, 18) of the lower (17) and upper (16) caps thereby forming an angular-contact rolling bearing.

13. Rolling bearing according to Claim 12, **characterized in that** one race has an external diameter substantially equal to the internal diameter of the other race, so that the lower race (13) and upper race (12) can be obtained from one and the same blank to reduce their fabrication cost.

14. Rolling bearing according to either one of Claims 12 or 13, **characterized in that** the ratio between the internal diameter of one outer race and the external diameter of the other race lies between 1 and 1.05.

15. Rolling bearing according to any one of Claims 12 to 14, **characterized in that** the upper cap (16) and lower cap (17) define an internal space in which the upper race (12) and lower race (13) are located, the upper and lower caps comprising sealing means to seal the internal space.

16. Rolling bearing according to any one of Claims 12 to 15, **characterized in that** one cap (16) comprises a skirt (21) extending axially toward the other cap (17) and radially limiting the internal space, while forming a narrow sealing passage with the other cap (17).

17. Rolling bearing according to any one of Claims 12 to 16, **characterized in that** one cap (16) comprises axial means of retention with the other cap (17).

18. Rolling bearing according to any one of Claims 12 to 17, **characterized in that** one cap (17) comprises a radially elastic lip (25) extending toward a skirt (20) of the other cap thereby forming a narrow passage and cooperating with a radial flange (26) of the skirt (20) to allow an axial motion in one direction while preventing an inverse axial motion.

19. Rolling bearing according to any one of Claims 12 to 18, **characterized in that** it comprises a seal (27) placed on one cap (17) and having one lip (30) in contact with one radial portion (12b) of the race placed on the other cap (16), or with the other cap.

20. Rolling bearing according to any one of Claims 12 to 19, **characterized in that** a seal (27) is injection overmolded onto one cap (17) or dual injection molded at the same time as the cap.

## Patentansprüche

1. Drucklagereinrichtung für Radaufhängung eines Fahrzeugs, mit einem Schräglager, das ein Drucklager (8) bildet, mit einem Stützteller (11) für eine Feder und mit einem elastischen Trägerblock (2), wobei das Schräglager zwischen dem Stützteller (11) und dem starr mit der Karosserie des Fahrzeugs verbundenen elastischen Trägerblock (2) angeordnet ist, wobei zu dem Schräglager gehören: ein oberer Lagerring (12), der in einem oberen ringförmigen Deckel (16) angeordnet ist, der ein Zwischenglied zwischen dem oberen Ring (12) und dem elastischen Trägerblock (2) bildet, mit dem der obere Deckel (16) in Berührung steht, ein unterer Lagerring (13) und zwischen Lagerlaufflächen des oberen und unteren Lagerrings angeordnete Wälzkörper (14), **dadurch gekennzeichnet, dass** ein unterer ringförmiger Deckel (17) vorhanden ist, der ein Zwischenglied zwischen dem unteren Lagerring (13) und dem Stützteller (11) bildet, mit dem der untere Deckel (17) in Berührung steht, dass jeder Deckel (16, 17) einen dicken Abschnitt (18, 22) und einen dünnen Abschnitt (19, 23) aufweist, wobei der dünne Abschnitt (19, 23) des einen Deckels dem dicken Abschnitt (22, 18) des anderen Deckels in axialer Richtung gegenüber liegt, und dass der untere (13) und obere (12) Lagerring auf den dicken Abschnitten (22, 18) des unteren (17) und oberen (16) Deckels in Anlage kommen, so dass ein Schräglager entsteht.

2. Einrichtung nach Anspruch 1, **dadurch gekennzeichnet, dass** ein Lagerring einen Außendurchmesser aufweist, der im Wesentlichen gleich dem Innendurchmesser des anderen Rings ist, so dass es möglich ist, den unteren (13) und oberen (12) Lagerring aus ein und demselben Rohling zu erhalten, um **dadurch** die Herstellungskosten zu reduzieren.

3. Einrichtung nach einem der Ansprüche 1 oder 2, **dadurch gekennzeichnet, dass** das Verhältnis zwischen dem Innendurchmesser eines Außenrings und dem Außendurchmesser des anderen Rings zwischen 1 und 1,05 liegt.

4. Einrichtung nach einem der vorhergehenden Ansprüche, **dadurch gekennzeichnet, dass** der obere (16) und untere (17) Deckel einen Innenraum begrenzen, in dem sich der obere (12) und untere (13) Lagerring befinden, wobei der obere und untere Deckel Dichtungseinrichtungen aufweisen, um die Abdichtung des Innenraums sicherzustellen.

5. Einrichtung nach einem der vorhergehenden Ansprüche, **dadurch gekennzeichnet, dass** ein Deckel (16) einen Kragen (21) aufweist, der sich axial in Richtung auf den anderen Deckel (17) erstreckt und den Innenraum in radialer Richtung begrenzt, wobei ein enger Dichtungsspalt mit dem anderen Deckel (17) gebildet wird.

6. Einrichtung nach einem der vorhergehenden Ansprüche, **dadurch gekennzeichnet, dass** einer der Deckel (16) Mittel zur axialen Befestigung an dem anderen Deckel (17) aufweist.

7. Einrichtung nach einem der vorhergehenden Ansprüche, **dadurch gekennzeichnet, dass** einer der Deckel (17) eine radial elastische Lippe (25) aufweist, die sich in Richtung eines Kragens (20) des anderen Deckels erstreckt, wobei diese mit einem radialen Wulst (26) des Kragens (20) einen engen Spalt bildet und mit dem Wulst zusammenwirkt, um in einer Richtung eine axiale Bewegung zuzulassen und in umgekehrter Richtung eine axiale Bewegung zu verhindern.

8. Einrichtung nach einem der vorhergehenden Ansprüche, **dadurch gekennzeichnet, dass** diese eine Dichtungsanordnung (27) enthält, die auf einem Deckel (17) angeordnet ist und eine Lippe (30) aufweist, die mit einem radialen Abschnitt (12b) des Lagerrings, der auf dem anderen Deckel (16) angeordnet ist, oder mit dem anderen Deckel in Berührung steht.

9. Einrichtung nach einem der vorhergehenden Ansprüche, **dadurch gekennzeichnet, dass** eine Dichtungsanordnung (27) durch Spritzgießen auf einem Deckel (17) aufgespritzt ist oder gleichzeitig mit dem Deckel durch Doppelspritzen spritzgegossen ist.

10. Verfahren zur Herstellung eines Wälzlagers mit einem unteren Ring und einem oberen Ring, **dadurch gekennzeichnet, dass** aus einem ringförmigen dünnen Teller (35) zwei Lagerringe (36, 37) geformt werden, die mit torusförmigen Abschnitten (39, 41) ausgebildet sind, die Flächen (39a, 41a) aufweisen, die im Querschnitt ein konkaves Profil haben, wobei die Flächen (39a, 41a) in der Lage sind, Lagerlaufflächen zu bilden, wobei ein Ring (37) einen Innendurchmesser aufweist, der im Wesentlichen gleich dem Außendurchmesser des anderen Rings (36) ist, wobei die Ringe verbunden sind, dass die Ringe getrennt werden, und dass der Hohlkehlradius wenigstens eines Rings und/oder der Innendurchmessers des mit einem größeren Durchmesser bemessenen Ringes reduziert wird.

11. Herstellungsverfahren nach Anspruch 10, **dadurch gekennzeichnet, dass** zu dem Verfahren die Schritte gehören: Befestigen der Lagerringe (12, 13) an einem unteren (17) und oberen (16) ringförmigen Deckel, Anordnen von Wälzkörpern (14) zwischen den Ringen, um ein Radaufhängungslager (8) zu bilden, Anordnen des Wälzlagers zwischen einem Stützteller (11) für eine Feder und einem mit der Karosserie des Fahrzeugs starr verbundenen elastischen Trägerblock (2), wobei der obere Deckel (16) ein Zwischenglied zwischen dem oberen Lagerring (12) und dem elastische Trägerblock (2) bildet, mit dem er in Berührung gebracht wird, wobei der untere Deckel (17) ein Zwischenglied zwischen dem unteren Lagerring (13) und dem Stützteller (11) bildet, mit dem er in Berührung gebracht wird, wobei jeder Deckel (16, 17) einen dicken Abschnitt (18, 22) und einen dünnen Abschnitt (19, 23) aufweist, wobei der dünne Abschnitt (19, 23) eines Deckels dem dicken Abschnitt (22, 18) des anderen Deckels in axialer Richtung gegenüber liegt, wobei der untere (13) und obere (12) Ring auf den dicken Abschnitt (22, 18) des unteren (17) und oberen (16) Deckels in Anlage kommen, so dass ein Schräglager entsteht.

12. Schräglager (8) für Kraftfahrzeugradaufhängungseinrichtung, wobei zu dem Lager gehören: ein in einem oberen ringförmigen Deckel angeordneter oberer Lagerring (12), wobei der Deckel dazu eingerichtet ist, mit einem Stützelement in Berührung zu kommen, so dass er ein Zwischenglied zwischen dem oberen Lagerring (12) und dem Stützelement bildet, ein unterer Lagerring (13) und zwischen Lagerlaufflächen des oberen und unteren Lagerrings angeordnete Wälzkörper (14), **dadurch gekennzeichnet, dass** ein unterer ringförmiger Deckel (17) vorhanden ist, der dazu eingerichtet ist, mit einem anderen Stützelement in Berührung kommen, so dass ein Zwischenglied zwischen dem unteren Lagerring (13) und dem anderen Stützelement (11) gebildet wird, wobei jeder Deckel (16, 17) einen dicken Abschnitt (18, 22) und einen dünnen Abschnitt (19, 23) aufweist, wobei der dünne Abschnitt (19, 23) des einen Deckels dem dicken Abschnitt (22, 18) des anderen Deckels in axialer Richtung gegenüber liegt, wobei der untere (13) und obere (12) Lagerring auf den dicken Abschnitten (22, 18) des unteren (17) und oberen (16) Deckels in Anlage kommen, so dass ein Schräglager entsteht.

13. Lager nach Anspruch 12, **dadurch gekennzeichnet, dass** ein Lagerring einen Außendurchmesser aufweist, der im Wesentlichen gleich dem Innendurchmesser des anderen Lagerrings ist, so dass es möglich ist, den unteren (13) und oberen (12) Lagerring aus ein und demselben Rohling zu erhalten, um **dadurch** die Herstellungskosten zu reduzieren.

14. Lager nach einem der Ansprüche 12 oder 13, **dadurch gekennzeichnet, dass** das Verhältnis zwischen dem Innendurchmesser eines Außenrings und dem Außendurchmesser des anderen Rings zwischen 1 und 1,05 liegt.

15. Lager nach einem der Ansprüche 12 bis 14, **dadurch gekennzeichnet, dass** der obere (16) und untere (17) Deckel einen Innenraum begrenzen, in dem sich der obere (12) und untere (13) Lagerring befinden, wobei der obere und untere Deckel Dichtungseinrichtungen aufweisen, um die Abdichtung des Innenraums sicherzustellen.

16. Lager nach einem der Ansprüche 12 bis 15, **dadurch gekennzeichnet, dass** einer der Deckel (16) einen Kragen (21) aufweist, der sich axial in Richtung des anderen Deckels (17) erstreckt und den Innenraum in radialer Richtung begrenzt, wobei er einen engen Dichtungsspalt mit dem anderen Deckel (17) bildet.

17. Lager nach einem der Ansprüche 12 bis 16, **dadurch gekennzeichnet, dass** einer der Deckel (16) Mittel zur axialen Befestigung an dem anderen Deckel (17) aufweist.

18. Lager nach einem der Ansprüche 12 bis 17, **dadurch gekennzeichnet, dass** einer der Deckel (17) eine radial elastische Lippe (25) aufweist, die sich in Richtung eines Kragens (20) des anderen Deckels erstreckt, wobei sie mit einem radialen Wulst (26) des Kragens (20) einen engen Spalt bildet und mit dem Wulst zusammenwirkt, um eine axiale Bewegung in einer Richtung zuzulassen und eine axiale Bewegung in umgekehrter Richtung zu verhindern.

19. Lager nach einem der Ansprüche 12 bis 18, **dadurch gekennzeichnet, dass** es eine Dichtungsanordnung (27) enthält, die auf einem Deckel (17) angeordnet ist und eine Lippe (30) aufweist, die mit einem radialen Abschnitt (12b) des Lagerringes, der auf dem anderen Deckel (16) angeordnet ist, oder mit dem anderen Deckel in Berührung steht.

20. Lager nach einem der Ansprüche 12 bis 19, **dadurch gekennzeichnet, dass** eine Dichtungsanordnung (27) durch Spritzgießen auf einem Deckel (17) aufgespritzt ist oder gleichzeitig mit dem Deckel durch Doppelspritzen spritzgegossen ist.
